# FASCICULE DE BREVET EUROPEEN

(11) **EP 3 754 842 B1**
(45) Date de publication et mention de la délivrance du brevet: **17.11.2021**
(21) Numéro de dépôt: 20178656.3
(22) Date de dépôt: 05.12.2018
(51) Int. Cl.: H02S 20/32, H02S 40/22, H02S 40/42

(54) **MODULE PHOTOVOLTAÏQUE FLOTTANT**
SCHWIMMENDES FOTOVOLTAIKMODUL
FLOATING PHOTOVOLTAIC MODULE

(30) Priorité: 07.12.2017 FR 1761770
(43) Date de publication de la demande: 23.12.2020
(62) Demande divisionnaire de: 18811050.6
(73) Titulaire: Electricité de France, 75008 Paris (FR)
(72) Inventeur: EL HAJJE, Gilbert, 92200 Neuilly-sur-Seine (FR); CHIODETTI, Matthieu, 77210 Avon (FR); LE BERRE, Rémi, 77250 Episy (FR); VAEL, Frederik, 9040 Sint Amandsberg (BE)
(74) Mandataire: Plasseraud IP

(56) Documents cités:
- WO-A1-2014/005626
- CN-U- 206 629 012
- FR-B1- 2 954 000
- US-A- 4 296 731
- US-A- 4 771 764
- US-A1- 2016 059 938
- US-A1- 2016 141 437

## Description

### DOMAINE DE L'INVENTION

L'invention concerne un module flottant de production d'électricité à l'aide de panneaux photovoltaïques, et une centrale de production d'électricité comprenant plusieurs modules.

### ETAT DE LA TECHNIQUE

On connait des systèmes photovoltaïques flottants, qui comprennent un ou plusieurs panneaux photovoltaïques montés sur une armature flottante. Ces systèmes sont perçus comme plutôt avantageux, notamment par rapport à des systèmes photovoltaïques conventionnels (c'est-à-dire installés au sol ou sur des bâtiments), pour plusieurs raisons.

D'une part, la présence de l'eau dans l'environnement immédiat du système photovoltaïque permet un refroidissement naturel des panneaux et donc un gain d'efficacité. De plus, un système photovoltaïque flottant peut apporter des bienfaits à son environnement car, en bloquant une partie de la lumière provenant sur l'eau, il peut limiter la croissance indésirable des algues ou l'évaporation, par exemple dans un lac.

A titre d'exemple on connaît du document US2006/0090789 un module photovoltaïque flottant, qui comprend une armature tubulaire comprenant des éléments de flottaison cylindriques et des tubes de connexion à d'autres structures identiques. Sur cette armature sont disposés des panneaux photovoltaïques comprenant une seule face pourvue de cellules photovoltaïques, cette face étant orientée vers le ciel.

Ce type de structure présente une efficacité limitée, qui ne peut pas être accrue par l'utilisation de panneaux bifaces, car le coefficient de réflexion de l'eau, de l'ordre de 7%, est trop faible pour justifier le surcoût associé à de tels panneaux.

On connaît également le document US2009/0120486, qui décrit des panneaux photovoltaïques bifaces qui sont disposés parallèlement à la surface du sol, sur laquelle est disposé un revêtement réfléchissant. Cette structure est également limitée du point de vue de l'efficacité pour plusieurs raisons.

D'une part, aucun système de refroidissement des panneaux n'est décrit, on peut donc prévoir une élévation sensible de la température des panneaux liée à la lumière directe et à la lumière réfléchie, ce qui tend à réduire leur efficacité.

D'autre part, pour laisser passer suffisamment de lumière sur le revêtement réfléchissant, les panneaux sont positionnés à distance les uns des autres, ce qui augmente la surface au sol requise par cette installation.

### PRESENTATION DE L'INVENTION

Compte-tenu de ce qui précède, l'invention a pour but de pallier au moins en partie aux inconvénients de l'art antérieur.

En particulier, l'invention a pour but de proposer une installation photovoltaïque présentant une efficacité accrue par rapport à l'art antérieur.

Un autre but de l'invention est de proposer une installation présentant un encombrement réduit.

A cet égard, l'invention propose un module flottant de production d'électricité, comprenant :
- au moins un panneau photovoltaïque, et
- une armature flottante sur laquelle est monté le panneau,
caractérisé en ce que le panneau photovoltaïque comporte une face supérieure et une face inférieure adaptées pour générer de l'électricité par effet photovoltaïque, et en ce que le module flottant comprend en outre un dispositif réflecteur, adapté pour réfléchir des rayons lumineux vers la face inférieure du panneau, le dispositif réflecteur comprenant une pluralité de billes réfléchissantes flottantes et/ou une bâche fixée à l'armature.

L'armature flottante du module flottant peut comprendre une pluralité d'éléments tubulaires connectés les uns aux autres de manière à définir au moins une cellule fermée dans laquelle sont alors disposées les billes réfléchissantes flottantes, l'armature étant en outre adaptée pour retenir lesdites billes dans la cellule.

Dans des modes de réalisation où le dispositif réflecteur comprend au moins une bâche fixée à l'armature, la bâche est de préférence réfléchissante.

Dans un mode de réalisation, la bâche est tendue sur l'armature de manière à s'étendre au-dessus de la surface de l'eau quand le module est posé sur l'eau. En variante, la bâche est conformée pour recevoir un ballast d'eau, et le dispositif réflecteur comprend en outre une pluralité de billes flottantes réfléchissantes contenues par des bords de la bâche et/ou par l'armature flottante.

Avantageusement, mais facultativement, le module flottant peut en outre comprendre un dispositif de suivi azimutal du soleil, adapté pour faire pivoter le module ou le panneau en fonction de l'azimut du soleil.

De préférence, chaque panneau photovoltaïque s'étend selon un angle compris entre 0 et 40° par rapport à l'horizontale, et de préférence selon un angle compris entre 25 et 35° par rapport à l'horizontale.

L'invention a également pour objet une centrale photovoltaïque, comprenant une pluralité de modules flottants selon la description qui précède.

Le module flottant selon l'invention présente une efficacité élevée. En effet, l'utilisation de panneaux photovoltaïques bifaces et d'un dispositif réflecteur sur un module flottant permet de préserver les avantages liés à un module flottant (refroidissement naturel, limitation de l'évaporation, etc.) tout en augmentant l'efficacité d'une barge photovoltaïque conventionnelle.

Dans des modes de réalisation, le dispositif réflecteur comprend des billes flottantes réfléchissantes, contenues par une bâche ou des traverses rigidifiant l'armature. Le caractère sphérique des billes permet d'obtenir une réflexion diffuse de la lumière incidente, donc une meilleure répartition de la lumière réfléchie sur la face inférieure des panneaux.

Dans certains modes de réalisation, le dispositif réflecteur comprend une bâche fixée à l'armature, cette bâche pouvant être tendue au-dessus de l'eau ou recevoir un ballast d'eau. Ceci permet de stabiliser le module, ce qui lui confère une bonne efficacité et une bonne durée de vie.

Dans le cas où la bâche est réfléchissante, les fonctions de stabilisation mécanique et de réflexion optique sont réalisées simultanément sans engendrer de coûts supplémentaires.

Dans le cas où le module flottant comprend en outre un dispositif de suivi azimutal du soleil, la production d'énergie électrique dans une journée est maximisée.

### DESCRIPTION DES DESSINS

D'autres caractéristiques, buts et avantages de l'invention ressortiront de la description qui suit, qui est purement illustrative et non limitative, et qui doit être lue en regard des dessins annexés sur lesquels:
- La figure 1 représente un exemple d'un module flottant selon un premier mode de réalisation de l'invention,
- Les figures 2a et 2b représentent un exemple d'un module flottant selon un deuxième mode de réalisation de l'invention,
- La figure 3 représente un exemple d'un module flottant selon un troisième mode de réalisation de l'invention,
- La figure 4 représente un exemple de suivi azimutal du soleil d'un module flottant,
- Les figures 5a et 5b représentent les gains relatifs de production d'énergie électrique mensuelle et annuelle respectivement d'une centrale photovoltaïque flottante selon un exemple de réalisation de l'invention par rapport à une centrale photovoltaïque terrestre pourvue de panneaux monofaces.

### DESCRIPTION DETAILLEE D'AU MOINS UN MODE DE REALISATION DE L'INVENTION

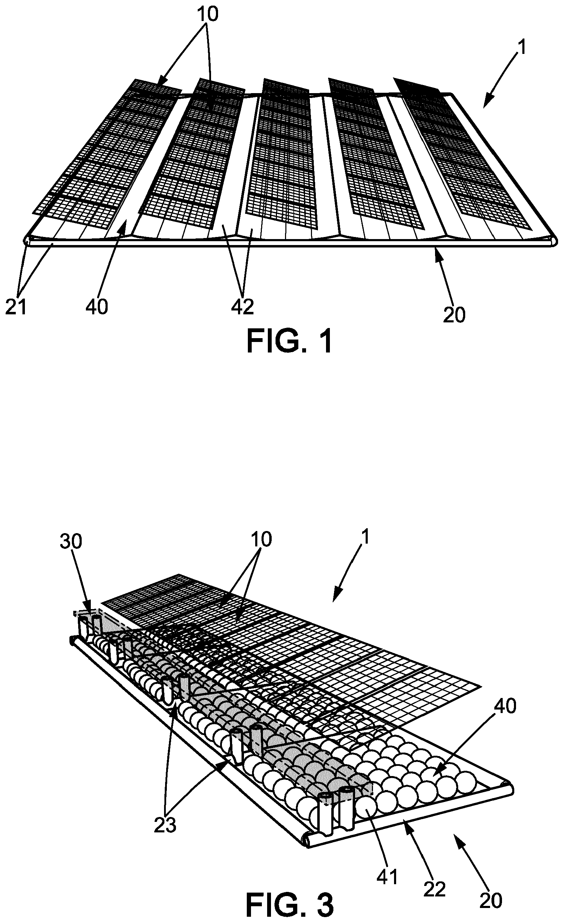

En référence aux figures 1 à 3, on va maintenant décrire un module flottant 1 de production d'électricité selon différents modes de réalisation de l'invention.

Le module flottant 1 est adapté pour être installé sur une surface aquatique. Cette surface peut par exemple être un lac, naturel ou artificiel, un étang, ou encore la surface de la mer, de préférence dans un endroit faiblement exposé aux vagues et aux courants, par exemple un port, une crique, un lagon, etc.

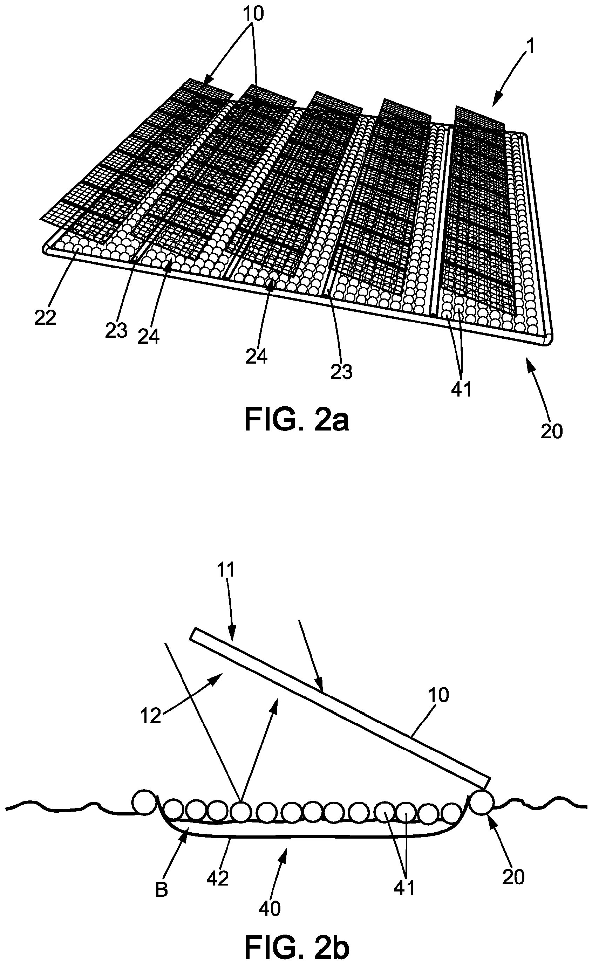

Le module flottant 1 comprend au moins un, et de préférence plusieurs panneaux photovoltaïques bifaces 10, par exemple jusqu'à dix panneaux photovoltaïques bifaces 10. Par « panneau photovoltaïque biface », on entend un panneau couvert sur deux surfaces de cellules photovoltaïques adaptées pour générer de l'électricité à partir de photons par effet photovoltaïque. En l'espèce les surfaces couvertes de cellules photovoltaïques sont opposées l'une à l'autre, et comprennent une face dite supérieure 11 qui est orientée vers le ciel pour recevoir directement la lumière provenant du soleil, et une face dite inférieure 12 (référencée sur la figure 2b) qui est orientée vers la surface aquatique sur laquelle le module est placé, de manière à recevoir des photons réfléchis sur cette surface aquatique ou sur d'autres éléments réfléchissants disposés sur cette surface, comme décrit plus en détails ci-après.

Avantageusement, chaque panneau photovoltaïque 10 s'étend selon un plan qui forme un angle compris entre 0 et 40° par rapport au plan de la surface aquatique. De préférence, cet angle est compris entre 25 et 35° pour une meilleure efficacité de conversion photovoltaïque. En effet, en-dessous de 25°, le De préférence, cet angle est de 30°, ce qui correspond à la position d'efficacité maximale de conversion photovoltaïque.

Le module flottant 1 comprend en outre une armature flottante 20, sur laquelle sont montés le ou les panneaux photovoltaïques 10. Cette armature flottante comprend avantageusement une pluralité de d'éléments tubulaires 21 rectilignes et/ou curvilignes adaptés pour être assemblés. Pour permettre au module de flotter, l'armature flottante est de préférence réalisée en un matériau léger tel que, mais non limitativement, le polyéthylène.

Selon un mode de réalisation préféré, les éléments tubulaires connectés les uns aux autres définissent au moins une cellule fermée. Par exemple, l'armature peut définir un cadre 22 carré ou rectangulaire. En variante, l'armature peut également comprendre, au sein du cadre, une ou plusieurs traverses 23 délimitant, avec les éléments tubulaires formant le cadre 22, plusieurs cellules fermées 24 (cf. figure 2a).

Cette structure comprenant une plusieurs cellules fermées confère une bonne stabilité au module 1. Pour accroitre encore cette stabilité, les panneaux photovoltaïques 10 portés par l'armature ne s'étendent avantageusement pas au-delà de la ou des cellules délimitées par l'armature 10, c'est-à-dire qu'ils sont contenus dans un volume dont les bords latéraux sont définis par l'armature, comme c'est le cas sur les figures 1 à 3.

En variante, d'autres formes d'armature peuvent être réalisées par l'assemblage des éléments tubulaires, comme par exemple une croix.

Avantageusement, mais facultativement, le module flottant 1 peut également comprendre une plate-forme 30 d'accès aux panneaux 10, cette plate-forme étant montée sur l'armature 20. Une telle plate-forme est représentée par exemple sur la figure 3. Pour préserver la flottabilité du module, la plate-forme 30 est de préférence réalisée en caillebotis, c'est-à-dire sous forme de treillis ou de grille. Cette plate-forme est avantageusement amovible, pour n'être installée que dans le cadre des opérations de maintenance et de réparation.

Le module flottant 1 comprend en outre un dispositif réflecteur 40, ce dispositif étant adapté pour augmenter l'albédo de la surface aquatique sur laquelle le module est positionné.

De la sorte, la quantité de lumière incidente réfléchie vers la face inférieure des panneaux photovoltaïques est plus importante qu'en l'absence du dispositif réflecteur.

Les figures 1 à 3 illustrent différents modes de réalisation de ce dispositif réflecteur.

Selon un mode de réalisation représenté en figure 3, le dispositif réflecteur 40 comprend des billes réfléchissantes flottantes 41. Les billes sont disposées sur la surface aquatique au sein de chaque cellule définie par l'armature flottante 20, et l'armature 20 est avantageusement conformée pour contenir les billes dans les cellules. Par exemple, lorsque le module 1 est positionné sur la surface aquatique, la partie émergée des éléments tubulaires définissant le cadre 22 et des traverses 23 doit présenter une hauteur, par rapport au niveau de l'eau, au moins égale au tiers, et de préférence au moins égale à la moitié de la hauteur d'une bille. Par exemple les billes peuvent présenter un diamètre compris entre 20 et 40 cm, et la partie émergée des éléments tubulaires et des traverses peut présenter une hauteur supérieure à 10 cm, de préférence supérieure à 15 cm.

Les billes sont de préférence sphériques pour assurer une meilleure réflexion diffuse de la lumière incidente. Elles sont de préférence de couleur blanche ou revêtues d'un matériau réfléchissant comme le Mylar™. En variante, elles peuvent être également revêtues de peinture blanche, ou présenter une surface argentée ou dorée, obtenue par un revêtement ou directement par le matériau de constitution des billes, par exemple métallique.

Dans ce mode de réalisation, et comme visible sur la figure 3, l'armature flottante 20 comprend de préférence un cadre 22 et une pluralité de traverses 23, permettant de définir plusieurs cellules où sont positionnées les billes, tout en rigidifiant l'armature 20. Une bonne stabilité est alors obtenue pour le module.

Ce mode de réalisation est très intéressant économiquement puisqu'il permet d'obtenir une bonne efficacité de conversion photovoltaïque en limitant le nombre de composants du module.

En variante, le dispositif réflecteur 40 est lui-même adapté pour stabiliser le module flottant 1. A cet égard, le dispositif réflecteur 40 peut comprendre une bâche 42 fixée sur l'armature 20.

La bâche 42 est de préférence hautement réfléchissante. Par exemple, la bâche peut être de couleur blanche, soit en étant tissée avec du fil blanc, soit en étant peinte en blanc ; ou encore être réalisée en un matériau hautement réfléchissant, par exemple en Mylar™.

De préférence, les billes réfléchissantes et/ou la ou les bâche(s) sont réalisées ou revêtues d'un matériau non polluant. On évitera par exemple l'utilisation de matériaux contenant de l'oxyde de titane TiO.

Selon un premier mode de réalisation, la bâche 42 est tendue sur l'armature flottante de manière à s'étendre au-dessus de la surface aquatique lorsque le module 1 est placé sur celle-ci.

Comme dans l'exemple représenté sur la figure 1, l'armature flottante peut comprendre plusieurs cellules délimitées par le cadre formé par les éléments tubulaires et des traverses supplémentaires (non visibles sur la figure). Dans ce cas, le dispositif réflecteur 40 peut comprendre plusieurs bâches 42, chaque bâche étant dimensionnée de manière à couvrir une cellule respective, et étant tendue sur cette cellule.

Le fait de tendre une bâche réfléchissante sur l'armature permet à la fois d'augmenter de manière significative la réflexion des rayons lumineux vers la face inférieure des modules photovoltaïques, mais également de rigidifier l'armature et donc de stabiliser le module.

Selon une variante de réalisation représentée sur les figures 2a et 2b, la bâche 41 (non visible sur la figure 2a) est dimensionnée et fixée à l'armature flottante 20 de manière à pouvoir recevoir un ballast d'eau B qui permet de stabiliser le module. Dans ce cas, la bâche est dimensionnée de manière à pouvoir être tendue une fois qu'un ballast d'eau d'une épaisseur comprise de préférence entre 5 et 15 cm, par exemple entre 10 et 15 cm, est positionné sur la bâche. Ceci permet de stabiliser le module tout en limitant la perte des propriétés réfléchissantes (l'albédo) de la bâche liée à l'eau.

Néanmoins, pour compenser la perte d'albédo de la bâche liée à la présence du ballast, le dispositif réflecteur 40 comprend très avantageusement des billes réfléchissantes flottantes 42, disposées sur le ballast d'eau et contenues par les bords de la bâche 30, et le cas échéant par les bords et/ou les traverses de l'armature flottante 10. Par exemple les billes flottantes 42 peuvent être contenues par les bords de la bâche 30 sur deux côtés opposés et par les bords ou traverses de l'armature flottante 10 sur les deux autres côtés.

Dans ce mode de réalisation, le taux de réflexion des rayons lumineux sur la face inférieure des panneaux est augmenté par la bâche et par les billes réfléchissantes, et le module 1 est stabilisé par le ballast d'eau reçu sur la bâche.

Le choix de l'un parmi les modes de réalisation précédemment décrit résulte d'un compromis entre la stabilité mécanique obtenue (qui est optimale dans les cas où une bâche est utilisée), l'amplification de la réflexion (qui est optimale quand on utilise des billes sphériques), et du critère économique, la solution combinant bâche et billes étant la plus avantageuse du point de vue des critères précédents mais aussi la plus onéreuse.

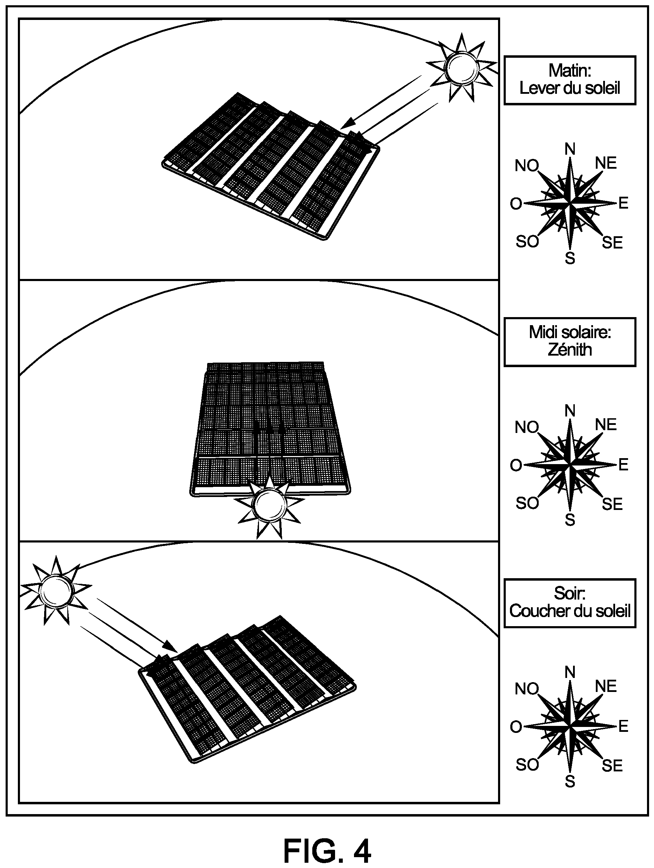

En référence aux figures 4a et 4b, le module 1 comprend avantageusement un dispositif 50 de suivi azimutal du soleil. Ce dispositif 50 permet de faire pivoter le module 1 pendant la journée de manière à ce que la face supérieure des panneaux soit toujours orientée vers le soleil, afin de maximiser la production d'énergie électrique des panneaux.

Ainsi, comme visible sur la figure 4a, le dispositif de suivi azimutal du soleil permet de positionner le module de manière à orienter les panneaux vers l'est le matin, vers le sud le midi, et vers l'ouest le soir.

Des dispositifs 50 de suivi azimutal sont bien connus de l'Homme de l'art, et commercialisés par des sociétés telles que par exemple Upsolar, Mecasolar, Jsolar, etc.

En fonction de la quantité d'électricité que l'on souhaite produire, on peut regrouper plusieurs modules pour former une centrale photovoltaïque (non représentée). Dans ce cas les modules peuvent être reliés physiquement entre eux par des moyens de fixation, éventuellement amovibles, et peuvent être reliés à un dispositif de conversion commun, adapté pour convertir le courant continu produit par les panneaux photovoltaïque en courant alternatif adapté pour être injecté dans le réseau.

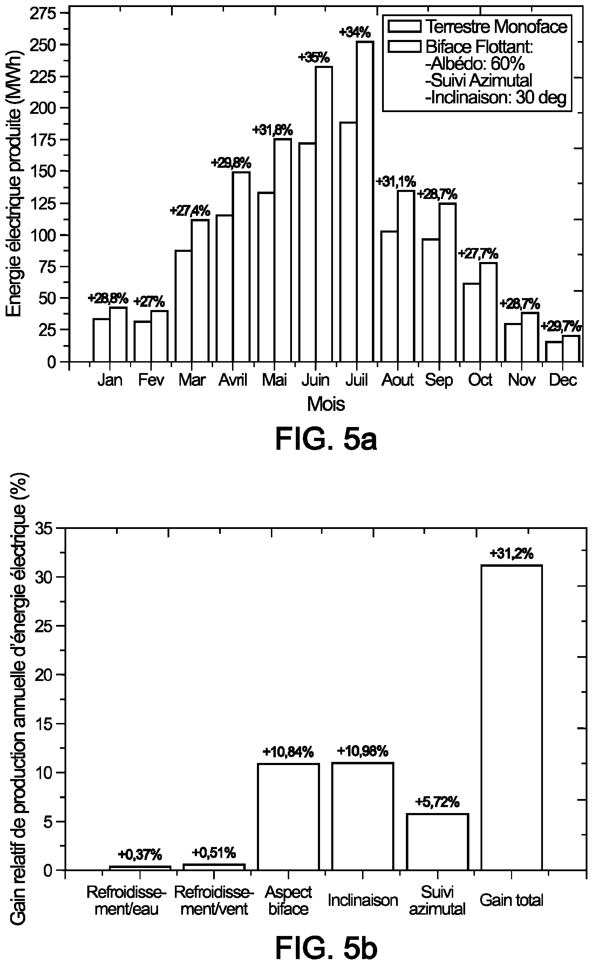

En référence à la figure 5a, on a représenté le gain d'efficacité théorique entre une centrale photovoltaïque réalisée à partir de modules flottants selon un mode de réalisation de l'invention et une centrale terrestre de puissance équivalente comprenant des panneaux monofaces.

Ce gain d'efficacité a été modélisé pour une puissance électrique installée de 1 Mégawatt crête. La centrale comporte 175 chaînes comprenant chacune 18 panneaux photovoltaïques en silicium cristallin biface, ayant chacun 350 Watts Crête de puissance. Les 18 panneaux d'une chaine sont répartis sur 4 modules flottants, par exemple en deux modules portant 4 panneaux et deux modules portant 5 panneaux.

La centrale flottante est modélisée pour les paramètres suivants :
- La centrale est placée sur un lac dont la température de l'eau est de 16°C,
- Le module comprend une bâche réfléchissante tendue sur l'armature conformément à l'exemple de la figure 1,
- La bâche présente un albédo de 60%,
- Les panneaux photovoltaïques sont inclinés de 30° par rapport à la surface de l'eau,
- Les panneaux sont espacés de 2.85 mètres,
- Les modules comprennent un dispositif de suivi azimutal du soleil.

La centrale terrestre utilisée pour la comparaison est de même puissance et comprend le même nombre de chaînes et de panneaux. On considère que la température de l'air est supérieure d'un degré à la température du lac. De plus, les propriétés de la centrale sont les suivantes :
- Les panneaux sont monofaces,
- Les panneaux sont inclinés de 15° par rapport à la surface du sol,
- L'albédo du sol est de 20%,
- Les panneaux sont espacés de 2,5 mètres,
- La centrale ne comprend pas de dispositif de suivi azimutal du soleil.

Sur la figure 5a, on constate un gain d'efficacité compris entre 27% pour le mois de février, et 35% pour le mois de juin, pour une moyenne annuelle de 31,2%.

Il est important de noter que ces chiffres sont obtenus pour un albédo de bâche de 60%, or cet albédo peut être encore supérieur en fonction du choix du matériau et/ou du revêtement de la bâche ou des billes réfléchissantes.

Sur la figure 5b, le gain procuré par l'utilisation du module flottant selon l'invention a été décomposé en fonction des différents paramètres du module. On constate notamment l'importance de l'aspect biface des panneaux couplés à l'utilisation du dispositif réflecteur puisqu'il est responsable d'un gain de 10,84% d'efficacité.

L'inclinaison des panneaux à 30° permet également une amélioration d'efficacité de 10,98%.

Le dispositif de suivi azimutal du soleil permet un gain de 5,72% par rapport à la station terrestre.

Enfin on remarque que le gain de productivité n'est pas la somme des gains résultant des différents paramètres, mais est supérieur à cette somme, de sorte qu'on peut en déduire l'existence d'une synergie entre facteurs affectant le gain total de production d'énergie photovoltaïque.

## Revendications

1. Module flottant (1) de production d'électricité, comprenant :
- au moins un panneau photovoltaïque (10), et
- une armature flottante (20) sur laquelle est monté le panneau (10), **caractérisé en ce que** le panneau photovoltaïque (10) comporte une face supérieure (11) et une face inférieure (12) adaptées pour générer de l'électricité par effet photovoltaïque, et **en ce que** le module flottant (1) comprend en outre un dispositif réflecteur (40), adapté pour réfléchir des rayons lumineux vers la face inférieure (11) du panneau, le dispositif réflecteur (40) comprenant une pluralité de billes (41) réfléchissantes flottantes et/ou une bâche (42) fixée à l'armature (20).

2. Module flottant (1) selon la revendication 1, dans lequel le dispositif réflecteur comprend une pluralité de billes (41) réfléchissantes flottantes, l'armature flottante (20) comprend une pluralité d'éléments tubulaires (21) connectés les uns aux autres de manière à définir au moins une cellule fermée (24) dans laquelle sont disposées les billes (41) réfléchissantes flottantes, l'armature étant en outre adaptée pour retenir lesdites billes dans la cellule.

3. Module flottant (1) selon la revendication 1, dans lequel le dispositif réflecteur comprend une bâche (42) fixée à l'armature, et la bâche (42) est réfléchissante.

4. Module flottant (1) selon la revendication 3, dans lequel la bâche (42) est tendue sur l'armature (20) de manière à s'étendre au-dessus de la surface de l'eau quand le module (1) est posé sur l'eau.

5. Module flottant (1) selon l'une des revendications 1 à 3, dans lequel la bâche (42) est conformée pour recevoir un ballast d'eau (B), et le dispositif réflecteur (40) comprend en outre une pluralité de billes flottantes (41) réfléchissantes contenues par des bords de la bâche et/ou par l'armature flottante.

6. Module flottant (1) selon l'une des revendications précédentes, comprenant en outre un dispositif de suivi azimutal (50) du soleil, adapté pour faire pivoter le module (1) ou le panneau (10) en fonction de l'azimut du soleil.

7. Module flottant (1) selon l'une des revendications précédentes, dans lequel chaque panneau photovoltaïque (10) s'étend selon un angle compris entre 0 et 40° par rapport à l'horizontale, et de préférence selon un angle compris entre 25 et 35° par rapport à l'horizontale.

8. Centrale photovoltaïque, comprenant une pluralité de modules flottants (1) selon l'une des revendications précédentes.

## Patentansprüche

1. Schwimmendes Stromerzeugungsmodul (1), umfassend:
- wenigstens ein Photovoltaikpaneel (10), und
- einen schwimmenden Rahmen (20), an dem das Paneel (10) montiert ist, **dadurch gekennzeichnet, dass** das Photovoltaikpaneel (10) eine Oberseite (11) und eine Innenseite (12) aufweist, die dazu ausgebildet sind, durch einen photovoltaischen Effekt Strom zu erzeugen, und dass das schwimmende Modul (1) ferner eine Reflexionsvorrichtung (40) umfasst, die dazu ausgebildet ist, Lichtstrahlen zur Innenseite (11) des Paneels zu reflektieren, wobei die Reflexionsvorrichtung (40) eine Mehrzahl von schwimmenden Reflexionskugeln (41) und/oder einen am Rahmen (20) befestigten Balken (42) umfasst.

2. Schwimmendes Modul (1) nach Anspruch 1, wobei die Reflexionsvorrichtung eine Mehrzahl von schwimmenden Reflexionskugeln (41) umfasst, wobei der schwimmende Rahmen (20) eine Mehrzahl von röhrenförmigen Elementen (21) umfasst, die miteinander verbunden sind, um wenigstens eine geschlossene Zelle (24) zu definieren, in der die schwimmenden Reflexionskugeln (41) angeordnet sind, wobei der Rahmen ferner dazu ausgebildet ist, die Kugeln in der Zelle zu halten.

3. Schwimmendes Modul (1) nach Anspruch 1, wobei die Reflexionsvorrichtung einen am Rahmen befestigten Balken (42) umfasst und der Balken (42) reflektierend ist.

4. Schwimmendes Modul (1) nach Anspruch 3, wobei der Balken (42) derart über den Rahmen (20) gespannt ist, dass er über die Wasseroberfläche hinausragt, wenn das Modul (1) auf dem Wasser platziert ist.

5. Schwimmendes Modul (1) nach einem der Ansprüche 1 bis 3, wobei der Balken (42) dazu angepasst ist, einen Wasserballast (B) aufzunehmen und wobei die Reflexionsvorrichtung (40) ferner eine Mehrzahl von schwimmenden reflektierenden Kugeln (41) umfasst, die von den Kanten des Balkens und/oder dem schwimmenden Rahmen gehalten sind.

6. Schwimmendes Modul (1) nach einem der vorangehenden Ansprüche, welches ferner eine Vorrichtung (50) zur Nachführung des Sonnenazimuts umfasst, die dazu ausgebildet ist, das Modul (1) oder das Paneel (10) entsprechend dem Sonnenazimut zu schwenken.

7. Schwimmendes Modul (1) nach einem der vorhergehenden Ansprüche, wobei sich jedes Photovoltaikpaneel (10) in einem Winkel zwischen 0 und 40° zur Horizontalen und vorzugsweise in einem Winkel zwischen 25 und 35° zur Horizontalen erstreckt.

8. Photovoltaikanlage, umfassend eine Mehrzahl von schwimmenden Modulen (1) nach einem der vorhergehenden Ansprüche.

## Claims

1. Floating module (1) for producing electricity, comprising:
- at least one photovoltaic panel (10), and
- a floating framework (20) on which the panel (10) is mounted,
**characterized in that** the photovoltaic panel (10) comprises an upper face (11) and a lower face (12) which are capable of generating electricity by photovoltaic effect, and **in that** the floating module (1) further comprises a reflective device (40) capable of reflecting light rays towards the lower face (11) of the panel, the reflective device (40) comprising a plurality of floating reflective balls (41) and/or a tarpaulin (42) which is attached to the framework (20).

2. Floating module (1) according to claim 1, wherein the reflective device comprises a plurality of floating reflective balls (41), the floating framework (20) comprises a plurality of tubular elements (21) connected to one another so as to define at least one closed cell (24) in which are arranged the floating reflective balls (41), the framework further being capable of retaining said balls within the cell.

3. Floating module (1) according to claim 1, wherein the reflective device comprises a tarpaulin (42) fixed to the framework, and the tarpaulin (42) is reflective.

4. Floating module (1) according to claim 3, wherein the tarpaulin (42) is stretched over the framework (20) so as to extend above the surface of the water when the module (1) is placed on the water.

5. Floating module (1) according to one of claims 1 to 3, wherein the tarpaulin (42) is shaped to receive a ballast of water (B), and the reflective device (40) further comprises a plurality of floating reflective balls (41) contained by edges of the tarpaulin and/or by the floating framework.

6. Floating module (1) according to one of the preceding claims, further comprising a sun azimuth tracking device (50), capable of rotating the module (1) or the panel (10) according to the azimuth of the sun.

7. Floating module (1) according to one of the preceding claims, wherein each photovoltaic panel (10) extends at an angle between 0 and 40° relative to the horizontal, and preferably at an angle between 25 and 35° relative to the horizontal.

8. Photovoltaic power station, comprising a plurality of floating modules (1) according to one of the preceding claims.
